# EUROPÄISCHE PATENTANMELDUNG

(11) **EP 3 753 762 A1**
(43) Veröffentlichungstag der Anmeldung: **23.12.2020**
(21) Anmeldenummer: 20174100.6
(22) Anmeldetag: 12.05.2020
(51) Int. Cl.: B60G 11/27, B60G 17/019, F16F 1/00, F16F 9/32, F16F 9/04

(54) **LUFTFEDER**

(30) Priorität: 18.06.2019 DE 102019208846
(71) Anmelder: ContiTech Luftfedersysteme GmbH, 30165 Hannover (DE)
(72) Erfinder: Kranz, Harald - c/o Continental AG, 30419 Hannover (DE)
(74) Vertreter: Finger, Karsten

(57) **Zusammenfassung**

Die Erfindung betrifft eine Luftfeder (10), beispielsweise für ein Kraftfahrzeug, mit einem schlauchartigen, aus einem verstärkten elastomeren Kunststoff bestehenden Luftfederbalg (12), welcher rotationssymmetrisch zu seiner Längsmittenachse (16) ausgebildet ist und ein erstes axiales Ende (20) sowie ein zweites Ende (28) aufweist, wobei das erste axiale Ende (20) an einer karosserieseitigen Oberplatte (24) und das zweite axiale Ende (28) an einer fahrwerkseitigen Stützeinrichtung (30) befestigt ist, wobei der Luftfederbalg (12), die Oberplatte (24) und die Stützeinrichtung (30) einen mit Druckluft befüllbaren Innenraum (32) begrenzen sowie druckdicht umschließen, und bei welcher ein Anschluss (36) für eine Druckluftleitung vorhanden ist, über den Druckluft in den Innenraum (32) einströmen und aus diesem abströmen kann. Zur Messung der auf der Luftfeder ruhenden Last ist vorgesehen, dass die Luftfeder (12) mindestens eine piezoelektrische Sensorfolie (90) aufweist, welche derartig ausgebildet und angeordnet ist, dass mittels dieser im Wesentlichen parallel zur Längsmittenachse (16) der Luftfeder (12) auf diese einwirkende mechanische Kräfte (F) messbar sind.

## Beschreibung

Die Erfindung betrifft eine Luftfeder, beispielsweise für ein Kraftfahrzeug, mit einem schlauchartigen, aus einem verstärkten elastomeren Kunststoff bestehenden Luftfederbalg, welcher rotationssymmetrisch zu seiner Längsmittenachse ausgebildet ist und ein erstes axiales Ende sowie ein zweites Ende aufweist, wobei das erste axiale Ende an einer karosserieseitigen Oberplatte und das zweite axiale Ende an einer fahrwerkseitigen Stützeinrichtung befestigt ist, wobei der Luftfederbalg, die Oberplatte und die Stützeinrichtung einen mit Druckluft befüllbaren Innenraum begrenzen sowie druckdicht umschließen, und bei welcher ein Anschluss für eine Druckluftleitung vorhanden ist, über den Druckluft in den Innenraum einströmen und aus diesem abströmen kann.

Luftfedern kommen bei Fahrzeugen aller Art, wie zum Beispiel Schienenfahrzeugen, Wasserfahrzeugen, Lastkraftwagen und Personenkraftwagen zum Einsatz, da aufgrund der fehlenden Eigendämpfung ein sensibles Ansprechverhalten mit einem hohen Federungskomfort realisierbar ist. Darüber hinaus kann mittels einer Luftfederung die Fahrzeughöhe belastungsabhängig eingestellt werden, wobei im Fall von höheren Lasten das Ansprechverhalten fester wird. Mittels einer flexibel einstellbaren Luftfederung kann zudem die Fahrzeughöhe an ein vorgegebenes Niveau einer Ladekante, an eine maximale Unterfahrhöhe eines Bauwerks wie einer Brücke oder dergleichen angepasst werden.

Luftfedern weisen in der Regel einen verstärkten, flexiblen, ein- oder mehrfaltigen sowie schlauchartigen Luftfederbalg auf, dessen eines axiales Ende mit einer karosserieseitigen Oberplatte und dessen anderes axiales Ende mit einer fahrgestellseitigen Unterplatte zur Schaffung eines mit Druckluft beaufschlagbaren Innenraumes druckdicht verbunden ist.

Damit eine präzise Höhenregelung einer Luftfeder möglich ist und die auftretenden Belastungen ermittelt werden können, ist es erforderlich, die Traglast der betreffenden Luftfeder im Betrieb zu messen. Zu diesem Zweck sind Sensorsysteme beispielsweise auf der Basis von Kraftmessdosen bekannt. Diese Kraftmessdosen sind jedoch üblicherweise separat oberhalb oder unterhalb der Luftfeder zur Detektion der angreifenden mechanischen Kräfte angeordnet. Von Nachteil ist hieran unter anderem, dass die Kraftmessdosen das Einbauvolumen der Luftfedern erhöhen.

Der Erfindung lag daher die Aufgabe zugrunde, eine neuartige Luftfeder vorzustellen, bei der eine im Wesentlichen bauraumneutrale Messung von an dieser auftretenden Traglasten im Betrieb möglich ist.

Die Lösung dieser Aufgabe wird mit einer Luftfeder erreicht, welche die Merkmale des Anspruchs 1 aufweist. Vorteilhafte Weiterbildungen und Ausgestaltungen dieser Luftfeder sind in den abhängigen Ansprüchen definiert.

Demnach wird eine Luftfeder vorgeschlagen, welche einen schlauchartigen, aus einem verstärkten elastomeren Kunststoff bestehenden Luftfederbalg aufweist, welcher rotationssymmetrisch zu seiner Längsmittenachse ausgebildet ist und ein erstes axiales Ende sowie ein zweites Ende hat. Das erste axiale Ende des Luftfederbalgs ist an einer karosserieseitigen Oberplatte und das zweite axiale Ende an einer fahrwerkseitigen Stützeinrichtung befestigt. Dabei begrenzen der Luftfederbalg, die Oberplatte und die Stützeinrichtung einen mit Druckluft befüllbaren Innenraum und umschließen diesen druckdicht. Außerdem ist ein beispielswiese an der Oberplatte angeordneter Anschluss für eine Druckluftleitung vorhanden, über den Druckluft in den Innenraum einströmen und aus diesem abströmen kann.

Zur Lösung der gestellten Aufgabe ist bei dieser Luftfeder vorgesehen, dass diese mindestens eine piezoelektrische Sensorfolie aufweist, welche derartig ausgebildet und angeordnet ist, dass mittels dieser im Wesentlichen parallel zur Längsmittenachse der Luftfeder auf diese einwirkende mechanische Kräfte messbar sind.

Durch diesen Aufbau der Luftfeder ist eine im Wesentlichen bauraumneutrale Messung der auf die Luftfeder einwirkenden vertikalen mechanischen Kräfte beziehungsweise Traglasten während des Betriebs möglich. Aufwendige konstruktive Anpassungen bereits vorhandener Designs von Luftfedern sind aufgrund der bauraumsparenden piezoelektrischen Sensorfolie nicht nötig.

Bei einer Beaufschlagung der piezoelektrischen Sensorfolie mit einer hinreichend hohen mechanischen Normalkraft wird von der Sensorfolie ein zu dieser Kraft proportionales Messsignal erzeugt, welches nach einer entsprechenden messtechnischen Aufbereitung, wie zum Beispiel einer Filterung, einer Verstärkung, Offset- beziehungsweise Nullpunktverschiebung oder dergleichen, einer Elektronikeinheit zur Bestimmung der einwirkenden Kraft in Echtzeit zugeleitet wird.

Gemäß einer technisch vorteilhaften Weiterbildung dieser Luftfeder ist vorgesehen, dass mindestens eine piezoelektrische Sensorfolie zumindest bereichsweise an einer Außenseite der Oberplatte und/oder an einer fahrwerkseitigen Unterseite einer mit der Stützeinrichtung verbundenen Fußplatte angeordnet ist. Hierdurch lassen sich die beim Betrieb der Luftfeder in vertikaler Richtung angreifenden mechanischen Kräfte beziehungsweise Traglasten in Echtzeit bei einem vergleichswiese einfachen konstruktiven Aufbau unmittelbar messtechnisch erfassen.

Entsprechend einer anderen Ausführungsform der Luftfeder ist vorgesehen, dass mindestens eine piezoelektrische Sensorfolie zumindest bereichsweise an einer innenraumseitigen Innenseite der Oberplatte angeordnet ist. Aufgrund dieser Platzierung ist die Sensorfolie der Luftfeder besser vor nachteiligen äußeren Umgebungseinflüssen geschützt. Mittels der innenraumseitig positionierten Sensorfolie ist eine Druckkraft im Innenraum der Luftfeder aufgrund des dort herrschenden Drucks indirekt messbar. Wegen des im Normalbetrieb der Luftfeder bestehenden Kräftegleichgewichts ist diese Druckkraft gleich der auf die Luftfeder von außen einwirkenden, vertikalen Kraft beziehungsweise Traglast und letztere somit leicht bestimmbar. Die auf die Luftfeder einwirkende äußere Kraft wird im Allgemeinen von einer Karosserie beziehungsweise Fahrzeugaufbau oder subsidiär von einem Fahrgestell eines mit der Luftfeder ausgestatteten Fahrzeugs hervorgerufen.

Insbesondere hinsichtlich der druckraumseitigen Anordnung der piezoelektrischen Sensorfolie kann mit Vorteil vorgesehen sein, dass diese in einer Vertiefung angeordnet ist, welche in der innenraumseitigen Innenseite der Oberplatte ausgebildet ist. Infolgedessen schließt die piezoelektrische Sensorfolie im Idealfall bündig mit der Innenseite der Oberplatte ab, so dass diese gut vor mechanischen und strömungstechnischen Beeinträchtigungen geschützt ist.

Gemäß einer anderen technisch günstigen Ausgestaltung ist vorgesehen, dass die mindestens eine piezoelektrische Sensorfolie zumindest bereichsweise mit einem flexiblen Schutzelement oder einer Schutzplatte abgedeckt ist. Hierdurch ist ein besonders effektiver Schutz der Sensorfolie vor einer etwaigen mechanischen Beeinträchtigung ihrer Integrität gegeben. Das flexible Schutzelement kann zum Beispiel aus einer Folie oder einer dünnen ebenen Platte aus einem Metall oder einem Kunststoffmaterial mit einer geringen Materialstärke gebildet sein, wobei die Geometrie des Schutzelements bevorzugt mit der Sensorfolie übereinstimmt.

Eine andere vorteilhafte Weiterbildung der Luftefder kann darin bestehen, dass deren Stützeinrichtung einen mit der Fußplatte zentrisch zur Längsmittenachse verbundenen und in Richtung zur Oberplatte gerichteten Stützkegel aufweist, welcher radial außen von einem Stützkörper umschlossen ist, wobei die radiale Außenfläche des Stützkörpers zumindest bereichsweise mit einer geometrisch korrespondierend ausgebildeten Innenfläche eines Außenrings verbunden ist. Diese Stützeinrichtung wird auch als Zusatzfeder oder Notfeder bezeichnet. Hierdurch ist eine mechanisch hochbelastbare, das heißt unter normalen Betriebsbedingungen praktisch unlösbare Verbindung zwischen dem bevorzugt aus einem metallischen Werkstoff gebildeten Stützkegel, dem kegelstumpfartigen Stützkörper und dem ebenfalls bevorzugterweise metallischen, in etwa hohlzylindrischen Außenring der Stützeinrichtung gegeben. Durch die konische Ausführung wird der Stützkörper bei zunehmender Traglast zudem immer fester zwischen dem Stützkegel und dem Außenring eingespannt.

Weiter kann vorgesehen sein, dass der Außenring der Stützeinrichtung karosserieseitig mit einer Aufnahmevorrichtung verbunden ist, an welcher eine Gleitplatte aufgenommen und befestigt ist, die mit deren freien Außenfläche in Richtung zur Oberplatte weist. Hierdurch ist die Oberplatte bei einem Schadensfall der Luftfeder, wie beispielsweise einem Luftverlust, einer permanenten Überlast oder einem kurzzeitigen vollständigen Durchfedern beziehungsweise Durchschlagen, definiert axial abgefangen. Durch die beschriebene Anordnung einer Gleitplatte sind im Kontaktfall auch schwimmende Bewegungen der Oberplatte quer zur Längsmittenachse an der Gleitplatte möglich.

Gemäß einem anderen Merkmal kann vorgesehen sein, dass das erste axiale Ende des Luftfederbalgs mittels eines Klemmrings mit der Innenseite der Oberplatte verbunden ist, und dass das zweite axiale Ende des Luftfederbalgs mit dem Außenring der Stützeinrichtung zusammengefügt ist. Infolgedessen ist eine mechanisch zuverlässige Befestigung des Luftfederbalgs gewährleistet. Die lösbare Verbindung zwischen dem ersten axialen Ende des Luftfederbalgs und der Oberplatte vereinfacht die Montage sowie die Wartung der Luftfeder. Das zweite axiale Ende des bevorzugt mit einem gummiartigen, faserarmierten Material gebildeten Luftfederbalgs ist luftdicht auf eine kegelige Außenfläche des metallischen Außenrings der Stützeinrichtung aufgedrückt und beispielsweise an einem radialen Ringwulst des Außenrings abgestützt.

Der Stützkörper besteht vorzugswiese aus einem elastischen Material, insbesondere mit einem Elastomer. Infolgedessen bleibt auch im Versagensfall der Luftfeder immer ein Restfedervermögen erhalten. Zudem kann die Verbindung mit dem elastomeren Stützkörper im Fall eines mit einem metallischen Werkstoff gebildeten Stützkegels zum Beispiel durch Vulkanisieren erfolgen. Dasselbe gilt für die Verbindung zwischen dem metallischen Außenring und dem elastomeren Stützkörper.

Gemäß einer weiteren Ausbildung einer erfindungsgemäßen Luftfeder kann vorgesehen sein, dass zwischen der erwähnten Gleitplatte und der Aufnahmevorrichtung für die Gleitplatte mindestens eine piezoelektrische Sensorfolie angeordnet ist. Hierdurch kann jede noch so geringfügige Berührung zwischen der Oberplatte und der Gleitplatte der Stützeinrichtung luftdruckunabhängig ermittelt werden. Ein solcher Fall kann beispielsweise bei einem vollständigen Druckverlust, einer dauerhaften mechanischen Überlastung oder einem temporären, vollständigen Durchfedern der Luftfeder und/oder einem schleichenden Luftverlust auftreten.

Weiter ist bevorzugt vorgesehen, dass die mindestens eine piezoelektrische Sensorfolie aus einer flexiblen Trägerfolie gebildet ist, auf der ein piezoelektrisches Substrat aufgebracht ist. Hierdurch kann die Sensorfläche praktisch an jeder ebenen oder gekrümmten Fläche innerhalb und/oder außerhalb der Luftfeder problemlos angebracht werden. Aufgrund der piezoelektrischen Funktionsweise ergibt sich zudem ein relativ starkes sowie zu der auf die Sensorfolie einwirkenden Kraft proportionales Messsignal. Die Materialstärke der mindestens einen piezoelektrischen Sensorfolie beträgt zwischen 0,5 µm und 50,0 µm, einschließlich der Bereichsgrenzen. Hierdurch wird eine Aufdickung einer Anbringungsfläche durch die aufgebrachte Sensorfolie weitestgehend vermieden.

Zum besseren Verständnis der Erfindung ist der Beschreibung eine Zeichnung beigefügt, in der Ausführungsbeispiele dargestellt sind. In der Zeichnung zeigt
Fig. 1 eine schematische Querschnittsdarstellung einer die Merkmale der Erfindung aufweisenden Luftfeder gemäß einer ersten sowie einer zweiten Ausführungsform,
Fig. 2 eine schematische Querschnittsdarstellung zwei weiterer Ausführungsformen der Luftfeder ähnlich der gemäß Fig. 1, und
Fig. 3 eine stark vergrößerte Darstellung des Ausschnitts B in Fig. 2.

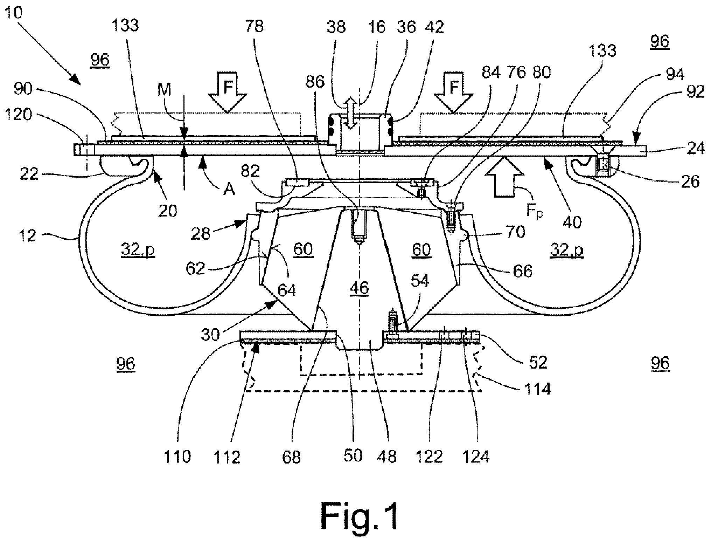

Die in Fig. 1 dargestellte Luftfeder 10 dient zum Einbau insbesondere in ein nicht dargestelltes Kraftfahrzeug, beispielsweis ein einen Lastkraftwagen, einen Bus oder einen Personenwagen. Die Luftfeder 10 weist hier einen schlauchartigen Luftfederbalg 12 auf, der aus einem verstärkten elastomeren Kunststoff gebildet ist und lediglich exemplarisch einfaltig ausgeführt ist. An dieser Stelle sei ausdrücklich darauf hingewiesen, dass die Luftfeder 10 selbstverständlich auch außerhalb der Kraftfahrzeugtechnik Anwendung finden kann und zum Beispiel im Bereich von pneumatischen Hebevorrichtungen, höhenverstellbaren Sitzen, Schwingungsisolatoren und so weiter einsetzbar ist.

Die Luftfeder 10 ist im Wesentlichen rotationssymmetrisch zu deren Längsmittenachse 16 aufgebaut. Ein erstes axiales Ende 20 des Luftfederbalgs 12 ist mittels eines Klemmrings 22 an einer karosserie- oder aufbauseitigen Oberplatte 24 der Luftfeder 10 mit Hilfe einer Vielzahl von umfangsseitig gleichmäßig zueinander beabstandeten Befestigungselementen 26 lösbar befestigt. Die bevorzugt lösbare Verbindung zwischen der Oberplatte 24 und dem ersten axialen Ende 20 des Luftfederbalgs 12 vereinfacht die Montage sowie gegebenenfalls die Wartung der Luftfeder 10. Die Befestigungselemente 26 sind zu diesem Zweck bevorzugt als Schrauben oder Schraubbolzen ausgebildet.

Das zweite axiale Ende 28 des Luftfederbalgs 12 ist an einer fahrwerksseitigen, pfeilerartig in Richtung zur Oberplatte 24 weisenden Stützeinrichtung 30 unlösbar befestigt, um einen druckdichten Innenraum 32 zu schaffen. Der Innenraum 32 der Luftfeder 10 ist mittels eines hohlzylindrischen Anschlusses 36 beziehungsweise Stutzens mit Druckluft oder einem anderen geeigneten gasförmigen Medium beaufschlagbar, wie mit dem Doppelpfeil 38 angedeutet ist. Hierdurch ist in dem Innenraum ein Druck p einstellbar, welcher höher ist als der Luftdruck der Außenumgebung 96.

Es besteht zwischen der vertikalen, das heißt einer im Wesentlichen parallel zur Längsmittenachse 16 angreifenden Kraft F beziehungsweise Traglast und einer durch den Druck p hervorgerufenen Druckkraft Fp gemäß der Beziehung Fp = p x A im Normalbetrieb der Luftfeder 10 im Wesentlichen ein Kräftegleichgewicht, wobei die für die Größe der Druckkraft Fp maßgebliche Fläche A ungefähr der der Druckluft ausgesetzten Fläche der Innenseite 40 der Oberplatte 24 der Luftfeder 10 abzüglich der Querschnittsfläche des Anschlusses 36 entspricht. Der Anschluss 36 in der Oberplatte 24 ist mit Hilfe von zwei Dichtelementen 42, insbesondere O-Ringen, gegenüber einer nicht dargestellten Zuleitung von einer Druckluftquelle abgedichtet.

Die Stützeinrichtung 30 der Luftfeder 10 weist einen Stützkegel 46 mit einem zentrisch zur Längsmittenachse 16 ausgebildeten, fahrwerksnahen axialen Zapfen 48 auf, der in einer axial durchgehenden Bohrung 50 in einer Fußplatte 52 der Luftfeder 10 aufgenommen ist, wobei das freie Ende des Zapfens 48 von der Oberplatte 24 der Luftfeder 10 weggerichtet ist. Die Bohrung 50 ist gleichfalls zentrisch zu der Längsmittenachse 16 der Luftfeder 10 ausgebildet.

Die Befestigung des Stützkegels 46 an der Fußplatte 52 erfolgt mit mehreren umfangsseitig gleichmäßig zueinander beabstandeten Befestigungselementen, von denen hier lediglich ein Befestigungselement 54 erkennbar ist. Diese Befestigungselemente 54 sind ebenfalls als Schraube oder Schraubbolzen ausgebildet. Der massive metallische Stützkegel 46 ist umfangsseitig, also radial außen, von einem Stützkörper 60 umschlossen. Hierzu weist der angenähert kegelstumpfförmige Stützkegel 46 eine konische Durchgangsbohrung 68 zur unlösbaren Verbindung mit dem Stützkörper 60 auf. Zudem ist eine konische radiale Außenfläche 62 des Stützkörpers 60 zumindest bereichsweise mit einer geometrisch dazu korrespondierend ausgebildeten radialen Innenfläche 64 eines Außenrings 66 fest beziehungsweise unter normalen Einsatzbedingungen der Luftfeder 10 unlösbar verbunden.

Das zweite axiale Ende 28 des Luftfederbalgs 12 ist im Bereich einer umlaufenden, radial nach außen gerichteten Ringwulst 70 an einer radialen Kegelfläche des Außenrings 66 fest aufgedrückt, das heißt bei normalen Betriebsbedingungen der Luftfeder 10 praktisch unlösbar mit diesem verbunden.

Der Stützkörper 60 besteht aus einem Elastomer, wie zum Beispiel einer Gummimischung, einem Silikon oder dergleichen. Die Verbindung zwischen dem bevorzugt aus einem metallischen Werkstoff gefertigten massiven Stützkegel 46 und dem elastischen Stützkörper 60 kann beispielsweise durch Vulkanisieren, Verkleben, Anspritzen, Verschweißen oder dergleichen erfolgt sein. Ebenso ist der gleichfalls bevorzugt aus einem metallischen Material gebildete massive Außenring 66 mit der konischen Außenfläche 62 des Stützkörpers 60 fest, das heißt praktisch unlösbar verbunden.

Der Außenring 66 der Stützeinrichtung 30 ist mit einer ringförmigen Aufnahmevorrichtung 76 für eine quer zur erwähnten Längsmittenachse 16 orientierte Gleitplatte 78 verbunden. Diese Verbindung ist mittels umfangsseitig gleichmäßig zueinander beabstandeten Befestigungselementen 80 realisiert, welche als Schrauben oder Schraubbolzen ausgebildet sind.

Die in Richtung zur Innenseite 40 der Oberplatte 24 zeigende, im Wesentlichen kreisringförmige freie Oberseite der Gleitplatte 78 ist in einer in Richtung zur Oberplatte 24 offenen Ringnut 82 in der Aufnahmevorrichtung 76 aufgenommen und darin mittels mehrerer bevorzugt umfangsseitig gleichmäßig zueinander beabstandet angeordneter Befestigungselemente 84 befestigt, welche als Schrauben, Schraubbolzen oder dergleichen ausgebildet.

Mittels der Gleitplatte 78 ist sichergestellt, dass bei einem Schaden der Luftfeder 10, das heißt bei einem zumindest teilweisen Überdruckverlust des Innenraums 32, eine definierte axiale Wegbegrenzung für die Oberplatte 24 nach unten gegeben ist. Dabei kann die Oberplatte 24 zugleich im Wesentlichen quer zur Längsmittenachse 16 auf der Gleitplatte 78 der Stützeinrichtung 30 gleiten, sofern dies notwendig werden sollte. Durch die Federelastizität des aus einem Elastomer gebildeten kompakten Stützkörpers 60 ist zudem in einem Havariefall, das heißt bei einem vollständigen oder teilweisen Luftverlust, stets eine zumindest rudimentäre Restfederwirkung der Luftfeder 10 sichergestellt. Darüber hinaus wird ein Durchfedern im Fall einer extrem hohen Traglast F, bei dem die Oberplatte 24 zumindest kurzzeitig an der Gleitplatte 78 anschlägt beziehungsweise in einen direkten mechanischen Kontakt mit dieser tritt, durch die Elastizität des Stützkörpers 60 zumindest teilweise abgemildert. Die Befestigungselemente 84 an der Gleitplatte 78 sind in die Gleitplatte 78 eingesenkt und schließen daher bündig mit deren freien Oberseite ab, um ein ungehindertes Gleiten der Oberplatte 24 auf der Gleitplatte 78 bei einem Ausfall der Luftfeder 10 zu ermöglichen.

Außerdem ist in den massiven metallischen Stützkegel 46 eine in Richtung zur Oberplatte 24 weisende, nicht durchgehende, also sackförmige Gewindebohrung 86 eingebracht, welche als Verpackungshilfe für den Transport der Luftfeder 10 dient. Die Gleitplatte 78 ist bevorzugt aus einem Kunststoff mit einem möglichst kleinen Reibungskoeffizienten, wie zum Beispiel einem Polytetrafluorethylen (Teflon®) oder einem Polyethylen (PE) gebildet.

Gemäß einer ersten in Fig. 1 dargestellten Ausführungsform der Luftfeder 10 ist eine kraftsensitive und damit auch drucksensitive piezoelektrische Sensorfolie 90 zumindest bereichsweise zwischen einer aufbauseitigen beziehungsweise karosserieseitigen Außenseite 92 der Oberplatte 24 der Luftfeder 10 und einer zeichnerisch lediglich angedeuteten Karosserie 94 eines nicht dargestellten und mit der Luftfeder 10 ausgerüsteten Kraftfahrzeugs angeordnet. Dabei ist die Sensorfolie 90 von einer vergleichsweise dünnen aber festen und elastischen Schutzfolie 133 oder Schutzplatte in Richtung zum Fahrzeugaufbau beziehungsweise zur Karosserie 94 abgedeckt. Die Schutzfolie 133 oder Schutzplatte kann beispielsweise aus einem metallischen Material und/oder mit einem gegebenenfalls faserarmierten Kunststoff hergestellt sein. Die vom Innenraum 32 abgewandte Außenseite 92 der Oberplatte 24 weist in Richtung der Außenumgebung 96 der Luftfeder 10.

Die piezoelektrische Sensorfolie 90 besteht in dem hier gewählten Ausführungsbeispiel aus einer nicht näher dargestellten flexiblen Folie als Trägermaterial, auf der ein drucksensitives piezoelektrisches Substrat aufgebracht ist. Die Materialstärke M der piezoelektrischen Sensorfolie 90 beträgt hier zwischen mindestens 0,5 µm und höchstens 50 µm. Der genaue konstruktive Aufbau einer derartigen drucksensitiven piezoelektrischen Sensorfolie 90 ist einem auf dem Gebiet der Messtechnik tätigen Fachmann hinlänglich bekannt, so dass an dieser Stelle auf eine eingehendere Beschreibung verzichtet werden kann. Aufgrund der geringen Materialstärke M der Sensorfolie 90 ist deren bauraumneutrale sowie einfache Montage beziehungsweise Integration in oder an beliebigen Komponentenflächen der Luftfeder 10 gewährleistet. Konstruktive Änderungen an bereits vorhandenen und bewährten Luftfedern können daher ersatzlos entfallen. Darüber hinaus kann die, auf die Luftfeder 10 während des Betriebs einwirkende vertikale Kraft F beziehungsweise Traglast auch während des Betriebs der Luftfeder 10 mit Hilfe der piezoelektrischen Sensorfolie 90 ermittelt werden.

Die piezoelektrische Sensorfolie 90 generiert beim Einwirken der beispielsweise von der Karosserie 94 hervorgerufenen vertikalen Kraft F auf die Oberplatte 24 der Luftfeder 10 ein dazu im allgemeinen proportionales elektrisches Messsignal, das mittels einer nicht dargestellten leistungsfähigen digitalen Elektronikeinheit zur Bestimmung der aktuellen Kraft F beziehungsweise Traglast F in Echtzeit auswertbar ist. In Abhängigkeit von der aktuellen Kraft F kann dann beispielsweise der Druck p innerhalb des Innenraums 32 durch das Zuführen oder Ablassen von Luft über den Anschluss 36 mit Hilfe einer nicht dargestellten Druckluftquelle entsprechend nachgesteuert und/oder nachgeregelt werden, welches mit dem Doppelpfeil 38 angedeutet ist.

Gemäß einer zweiten in Fig. 1 dargestellten Ausführungsform der erfindungsgemäßen Luftfeder 10 ist eine Sensorfolie 110 zwischen der fahrwerkseitigen Unterseite 112 der Fußplatte 52 der Luftfeder 10 und einem Fahrgestell 114 des nicht eingezeichneten Kraftfahrzeugs angeordnet. Die Funktionsweise und der konstruktive Aufbau der Sensorfolie 110 entsprechen hierbei genau dem der bereits erläuterten Sensorfolie 90 im Bereich der Oberplatte 24, sodass an dieser Stelle auf die detaillierte Beschreibung der Sensorfolie 90 weiter oben verwiesen sei.

Um eine zu hohe punktuelle mechanische Belastung der piezoelektrischen Sensorfolie 90, 110 zu vermeiden, ist bevorzugt jeweils eine im Wesentlichen über die ganze Flächenerstreckung der Oberplatte 24 beziehungsweise der Fußplatte 52 verlaufende Anordnung der jeweiligen piezoelektrischen Sensorfolien 90, 110 vorgesehen. Hierbei sind zum Beispiel der Zapfen 48 des Stützkegels 46 im Bereich der piezoelektrischen Sensorfolie 110 und der Anschluss 36 in der Oberplatte 24 sowie eine darin eingebrachten Durchgangsbohrungen 120 im Bereich der oberen piezoelektrischen Sensorfolie 90 aus dieser ausgespart. Davon abweichend überdeckt die obere piezoelektrische Sensorfolie 90 das den Klemmring 22 haltende Befestigungselement 26 in der Oberplatte 24, und die untere piezoelektrische Sensorfolie 110 erstreckt sich über die Durchgangsbohrungen 122, 124 innerhalb der Fußplatte 52 hinweg beziehungsweise überdeckt diese.

Die piezoelektrischen Sensorfolien 90, 110 sind bevorzugt entweder in dem Bereich der Oberplatte 24 oder im Bereich der Fußplatte 52 angeordnet. Die beiden piezoelektrischen Sensorfolien 90, 110 können beispielsweise selbstklebend ausgeführt sein oder mit einem geeigneten Klebemittel an der Oberplatte 24 oder Fußplatte 52 befestigt sein. Darüber hinaus ist es aber auch möglich, sowohl an der Außenseite 92 der Oberplatte 24 die drucksensitive piezoelektrische Sensorfolie 90 zu positionieren als auch an der Unterseite 112 der Fußplatte 52 zusätzlich die drucksensitive piezoelektrische Sensorfolie 110 vorzusehen. Hierdurch stehen zwei voneinander unabhängige elektrische Messsignale zur Auswertung durch die Elektronikeinheit zur Verfügung, die jeweils der einwirkenden vertikalen Kraft F proportional sind, so dass sich die Messunsicherheit reduzieren und zugleich die Ausfallsicherheit beträchtlich steigern lässt.

Neben der Messung der vertikalen Kraft F kann mittels eines geeigneten Auswertealgorithmus innerhalb der erwähnten digitalen Elektronikeinheit auch ein rascher Abfall des Drucks p im Innenraum 32 und damit ein Ausfall beziehungsweise ein Defekt der Luftfeder 10 erkannt werden. Dies ist in der Regel dann der Fall, wenn das elektrische Messsignal der piezoelektrischen Sensorfolien 90, 110 zumindest kurzzeitig eine überdurchschnittlich hohe Amplitude aufweist, welches darauf hindeutet, dass die Oberplatte 24 an die Gleitplatte 78 der Stützeinrichtung 30 anschlägt und hierdurch eine messbare Kraftspitze hervorruft. Die Detektion eines schleichenden beziehungsweise extrem langsamen Abfalls des Drucks p in dem Innenraum 32 der Luftfeder 10, der gleichfalls langfristig dazu führt, dass die Gleitplatte 78 der Stützeinrichtung 30 in einen mechanischen Kontakt mit der Oberplatte 24 gerät und die Luftfeder 10 dadurch in deren Funktion ausfällt, ist demgegenüber nicht ohne weiteres mit der in Fig. 1 gezeigten Positionierung der drucksensitiven piezoelektrischen Sensorfolien 90, 110 realisierbar, da aufgrund des sanften Absenkungsvorgangs der Oberplatte 24 auf die Gleitplatte 78 keine schlagartige Druckspitze entsteht.

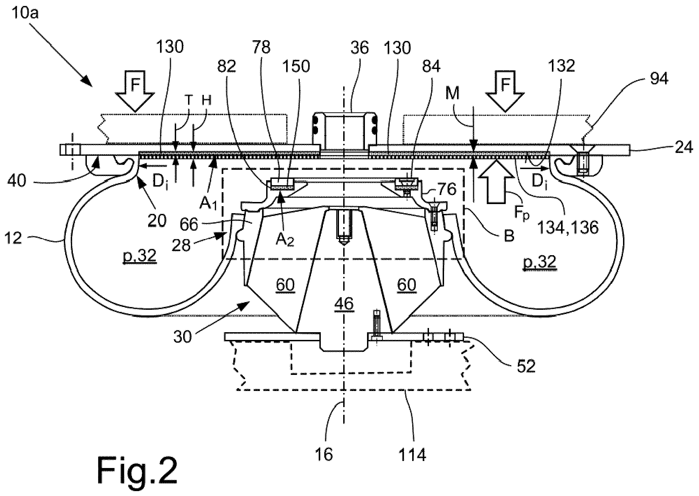

Die Fig. 2 zeigt eine schematische Querschnittsdarstellung zwei weiterer Ausführungsformen der Luftfeder 10a, welche sehr ähnlich aufgebaut ist wie die Luftfeder 10 gemäß Fig. 1. Die zu der Längsmittenachse 16 rotationssymmetrische Luftfeder 10a weist daher ebenfalls die Oberplatte 24 und die Stützeinrichtung 30 auf, an denen die beiden axialen Enden 20, 28 des Luftfederbalgs 12 zur Schaffung des unter dem Druck p stehenden Innenraums 32 befestigt sind. Zwischen der auf die Oberplatte 24 einwirkenden und von dem Aufbau beziehungsweise der Karosserie 94 des hervorgerufenen, im Wesentlichen vertikalen Kraft F und der entgegengesetzt orientierten Druckkraft Fₚ besteht im Wesentlichen ein statisches Kräftegleichgewicht. Die Stützeinrichtung 30 ist mit der Fußplatte 52 der Luftfeder 10a lösbar verbunden und durch das Fahrgestell 114 des Kraftfahrzeugs abgefangen. Die Stützeinrichtung 30 umfasst den schon erwähnten metallischen Stützkegel 46, den elastischen Stützkörper 60 mit dem daran unlösbar befestigten Außenring 66 sowie die mit diesem lösbar verbundene ringförmige Aufnahmevorrichtung 76 für die Gleitplatte 78. Die zum Beispiel von der Karosserie 94 hervorgerufene und auf die Oberplatte 24 der Luftfeder 10 einwirkende Kraft F beziehungsweise Traglast wird demnach über die Fußplatte 52 auf das Fahrgestell 114 des Kraftfahrzeugs übergeleitet und umgekehrt.

Im Unterschied zu den beiden Ausführungsformen der Luftfeder 10 gemäß Fig. 1 ist bei der nachfolgend zunächst beschriebenen dritten Ausführungsform der Luftfeder 10a eine drucksensitive und damit auch kraftsensitive, piezoelektrische Sensorfolie 130 in einer kreisringförmigen Vertiefung 132 in der Innenseite 40 der Oberplatte 24 angeordnet. Die Sensorfolie 130 und die Vertiefung 132 erstrecken sich mit Ausnahme des Anschlusses 36 über den Innendurchmesser Dᵢ des Luftfederbalgs 12 im Bereich von dessen ersten, oberen axialen Ende 20. Die drucksensitive und damit auch kraftsensitive Sensorfolie 130 erstreckt sich über eine Fläche A₁. Im Innenraum 32 der Luftfeder 10 herrscht der Druck p. Die Tiefe T der Vertiefung 132 ist bevorzugt so bemessen, dass diese in etwa der Materialstärke M der Sensorfolie 130 entspricht, wodurch hier ein ungefähr bündiger Abschluss zwischen der Sensorfolie 130 und der Innenseite 40 der Oberplatte 24 der Luftfeder 10a gegeben ist.

Zum Schutz der mechanischen Integrität der drucksensitiven piezoelektrischen Sensorfolie 130 ist diese vorzugsweise zumindest bereichsweise mit einem robusten Schutzelement 134 bedeckt. Das Schutzelement 134 ist hier beispielhaft durch eine zur Sensorfolie 130 geometrisch kongruente Schutzplatte 136 gebildet. Die Schutzplatte 136 kann beispielsweise aus einem metallischen Material und/oder mit einem gegebenenfalls faserarmierten Kunststoff gefertigt sein. Die Schutzplatte kann aber auch als eine feste Schutzfolie ausgebildet sein. Infolgedessen kann eine Beschädigung der Sensorfolie 130 bei einem harten Aufschlag der Oberplatte 24 in einem etwaigen Defekt- oder Havariefall der Luftfeder auf die Gleitplatte 78 der Stützeinrichtung 130 weitestgehend vermieden werden. Die Höhe H beziehungsweise Dicke der Schutzplatte 136 entspricht hier lediglich beispielhaft der Materialstärke M der Sensorfolie 130, sie kann jedoch auch eine hiervon abweichende Stärke aufweisen. Sowohl die drucksensitive piezoelektrische Sensorfolie 130 als auch die Schutzplatte 136 weisen hier jeweils eine ungefähr kreisringförmige Form auf. Die Sensorfolie 130 und die Schutzplatte 136 können beispielsweise selbstklebend ausgerüstet oder mit Hilfe eines geeigneten Klebemittels aneinander und in der Vertiefung 132 der Oberplatte 24 befestigt sein.

Aufgrund der von der ersten und zweiten Ausführungsform gemäß der Fig. 1 abweichenden Positionierung der kraftsensitiven und damit auch drucksensitiven Sensorfolie 130 im Innenraum 32 beziehungsweise innerhalb der innenraumseitigen Vertiefung 132 der Oberplatte 24 der Luftfeder 10 ist eine direkte Messung der angreifenden Kraft F oder Traglast nicht realisierbar. Vielmehr erfasst die Sensorfolie 130 den im Innenraum 32 aktuell bestehenden Druck p beziehungsweise die diese oder auf die Schutzplatte 136 einwirkende resultierende Druckkraft Fₚ. Hieraus lässt sich aufgrund des zwischen der vertikalen Kraft F beziehungsweise Traglast und der Druckkraft Fₚ im Normalbetrieb im Wesentlichen bestehenden Kräftegleichgewichts mithilfe der erwähnten Elektronikeinheit die aktuell auf die Luftfeder einwirkende Kraft F beziehungsweise Traglast ermitteln. Umgekehrt ist mittels der Elektronikeinheit der Druck p im Innenraum 32 der Luftfeder 10a gemäß der Gleichung p = Fₚ / A₁ bestimmbar. Daneben kann mittels der Sensorfolie 130 auch ein Defekt der Luftfeder 10a, insbesondere ein Durchfedern oder ein vollständiger Druckverlust, detektiert werden, da ein Anschlagen der Oberplatte 24 an der Gleitplatte 78 zu einer lokalen Kraftspitze an der Sensorfolie 130 im Bereich der Gleitplatte 78 führt. Hierdurch erzeugt die Sensorfolie 130 ein elektrisches Messsignal, welches sich mittels der Elektronikeinheit weiter zur eindeutigen Erkennung des Ausfalls auswerten lässt.

Gemäß einer vierten in Fig. 2 dargestellten Ausführungsform der Luftfeder 10a ist eine kraftsensitive und damit auch drucksensitive piezoelektrische Sensorfolie 150 zumindest bereichsweise zwischen der Gleitplatte 78 der Stützeinrichtung 30 und der kreisringförmigen Ringnut 82 der näherungsweise ringförmigen Aufnahmevorrichtung 76 der Stützeinrichtung 30 angeordnet. Die gleichfalls im Wesentlichen kreisringförmige Sensorfolie 150 weist hierbei eine Fläche A₂ auf, die der Bodenfläche der Ringnut 82 entspricht.

Die Messung des auf die Gleitplatte 78 einwirkenden Drucks p mittels der Sensorfolie 150, analog zu der im Rahmen der Beschreibung der dritten Ausführungsform erläuterten Vorgehensweise, ist nicht ohne weiteres möglich, da die Gleitplatte 78 durch die Befestigungselemente 84 axial beträchtlich vorgespannt ist. Erst wenn der Druck p im Innenraum 32 die axiale mechanische Vorspannkraft der Befestigungselemente 84 überwindet, kann die Sensorfolie 150 ein elektrisches Messsignal liefern, das der auf sie einwirkenden Druckkraft Fₚ und damit dem aktuellen Druck p proportional ist. Aus diesem Messsignal lässt sich wiederum die aktuelle, auf die Luftfeder 10a einwirkende vertikale Kraft F ermitteln. Mittels der gemäß der vierten Ausführungsform positionierten Sensorfolie 150 ist jedoch eine unmittelbare, präzise Messung eines mechanischen Kontaktes zwischen der Oberplatte 24 und der Gleitplatte 78 durchführbar, wie er beispielsweise in einem Totaldefekt der Luftfeder 10a durch einen vollständigen Druckverlust oder bei einem vollständigen Durchfedern der Luftfeder 10 im Fall einer zu hohen vertikalen Kraft F auftritt. Hierbei erzeugt die Sensorfolie 150 ein der einwirkenden Kraft F proportionales elektrisches Messsignal, das wiederum mittels der Elektronikeinheit auswertbar ist.

Darüber hinaus kann der Luftfeder 10a sowohl die Sensorfolie 130 innerhalb der Vertiefung 132 in der Oberplatte 24 gemäß Fig. 1 als auch die Sensorfolie 150 zwischen der Gleitplatte 78 und der Aufnahmevorrichtung 76 für Gleitplatte 78 gemäß Fig. 2 angeordnet sein. Außerdem können sämtliche in den Figuren 1 und 2 dargestellten räumlichen Anordnungen der drucksensitiven und damit auch kraftsensitiven, piezoelektrischen Sensorfolien miteinander kombiniert sein.

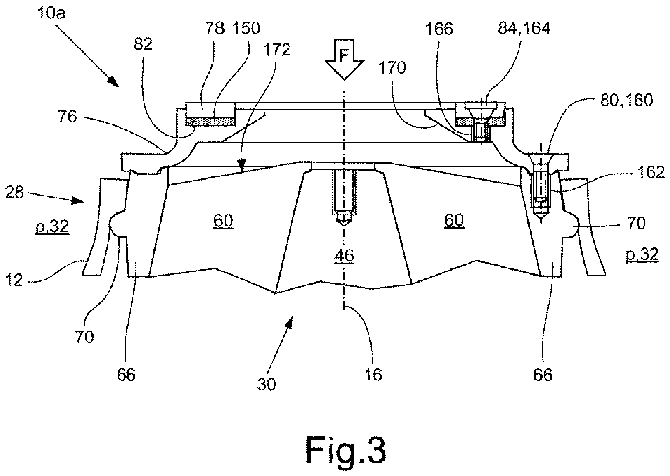

Die Fig. 3 zeigt eine stark vergrößerte Darstellung eines Ausschnitts B in Fig. 2. Die Stützeinrichtung 30 der Luftfeder 10 verfügt demnach über den massiven metallischen Stützkegel 46, der umfangsseitig fest mit dem elastomeren Stützkörper 60 verbunden ist, welcher seinerseits unlösbar mit dem metallischen Außenring 66 verbunden ist. Die ringförmige Aufnahmevorrichtung 76 für die Gleitplatte 78 ist mittels Befestigungselemente 84 mit dem Außenring 66 verbunden. Diese Befestigungselemente 84 sind als Schraubbolzen 160 ausgebildet und jeweils in Sackloch-Gewindebohrungen 162 im Außenring 66 eingeschraubt ist. Das zweite axiale Ende 28 des Luftfederbalgs 12 ist im Bereich der radial auswärts gerichteten Ringwulst 70 an einer radialen Kegelfläche des Außenrings 66 fest mit diesem zur Schaffung des Innenraums 32 verbunden. Innerhalb des Innenraumes 32 der Luftfeder 10a herrscht der Druck p.

Bei der in der Fig. 3 dargestellten vierten Ausführungsform der Luftfeder 10a ist zwischen der Ringnut 82 der Aufnahmevorrichtung 76 und der teilweise in der Ringnut 82 aufgenommenen Gleitplatte 78 die drucksensitive, piezoelektrische Sensorfolie 150 angeordnet. Die Gleitplatte 78 ist mittels Befestigungselemente 84 mit der Aufnahmevorrichtung 76 lösbar verbunden, welche hier nur exemplarisch als Schraubbolzen 164 ausgebildet und jeweils in eine durchgehende Gewindebohrung 166 der Aufnahmevorrichtung 76 eingeschraubt sind. Zur weiteren Minimierung der Reibung zwischen der Gleitplatte 78 und der hier nicht eingezeichneten Oberplatte der Luftfeder 10a sind der Schraubbolzen 164 jeweils versenkt in der Gleitplatte 78 angeordnet.

Die ringförmige Aufnahmevorrichtung 76 verfügt ferner zentrisch zur Längsmittenachse 16 über eine konische Durchführung 170, damit bei einem Defekt der Luftfeder 10 der Stützkegel 46 durch die dann erfolgende Verformung des Stützkörpers 60 in axialer Richtung nicht sofort an die Aufnahmevorrichtung 76 der mit dem hier nicht dargestellten Fahrgestell verbundenen Stützeinrichtung 30 anstößt. Aufgrund der Elastizität des Stützkörpers 60 kann die Aufnahmevorrichtung 76 zusammen mit der Gleitplatte 78 in der durch die vertikal einwirkende Kraft F vorgegebenen Orientierung soweit axial in Richtung zum Stützkegel 46 einfedern, bis die konisch gestufte Durchführung 170 der Aufnahmevorrichtung 76 zumindest bereichsweise an einer Oberseite 172 des Stützkörpers 60 anschlägt.

Die Elastizität des Stützkörpers 60 kann progressiv eingestellt sein, so dass das Federverhalten des Stützkörpers 60 beim Beginn eines Havariefalls der Luftfeder 10, 10a zur Komforterhöhung zunächst weich und bei steigendem axialen Einfederweg zunehmend härter wird, bis die Oberplatte 24 bei einem an sich zu vermeidenden Havariefall an der Oberseite 172 des Stützkörpers 60 und/oder an dem massiven, metallischen Stützkegel 46 anschlägt.

### Bezugszeichenliste

- 10: Luftfeder
- 10a: Luftfeder
- 12: Luftfederbalg
- 16: Längsmittenachse der Luftfeder
- 20: Erstes axiales Ende des Luftfederbalgs
- 22: Klemmring
- 24: Oberplatte
- 26: Befestigungselement
- 28: Zweites axiales Ende des Luftfederbalgs
- 30: Stützeinrichtung
- 32: Innenraum
- 36: Anschluss für Druckluft
- 38: Doppelpfeil
- 40: Innenseite der Oberplatte
- 42: Dichtelement
- 46: Stützkegel der Stützeinrichtung
- 48: Zapfen
- 50: Bohrung
- 52: Fußplatte
- 54: Befestigungselement
- 60: Stützkörper
- 62: Außenfläche des Stützkörpers
- 64: Innenfläche des Außenrings
- 66: Außenring
- 68: Konische Durchgangsöffnung
- 70: Ringwulst des Außenrings
- 76: Aufnahmevorrichtung
- 78: Gleitplatte
- 80: Befestigungselement
- 82: Ringnut in der Aufnahmevorrichtung
- 84: Befestigungselement
- 86: Gewindebohrung im Stützkegel
- 90: Piezoelektrische Sensorfolie
- 92: Außenseite der Oberplatte
- 94: Karosserie, Aufbau eines Kraftfahrzeugs
- 96: Außenumgebung
- 110: Piezoelektrische Sensorfolie
- 112: Unterseite der Fußplatte
- 114: Fahrgestell des Kraftfahrzeugs
- 120: Durchgangsbohrung in der Oberplatte
- 122: Durchgangsbohrung in der Fußplatte
- 124: Durchgangsbohrung in der Fußplatte
- 130: Piezoelektrische Sensorfolie
- 132: Vertiefung in der Oberplatte
- 133: Schutzelement oder Schutzfolie an der Sensorfolie
- 134: Schutzelement an der Sensorfolie
- 136: Schutzplatte an der Sensorfolie
- 150: Piezoelektrische Sensorfolie
- 160: Schraubbolzen
- 162: Sackförmige Gewindebohrung
- 164: Schraubbolzen
- 166: Durchgehende Gewindebohrung
- 170: Konische Durchführung in der Aufnahmevorrichtung
- 172: Oberseite des Stützkörpers
- p: Druck im Innenraum des Luftfederbalgs
- F: Vertikale Kraft, vertikale Traglast
- Fₚ: Druckkraft
- A: Fläche der Innenseite der Oberplatte
- A₁: Fläche einer Sensorfolie
- A₂: Fläche einer Sensorfolie
- B: Zeichnungsausschnitt
- Dᵢ: Durchmesser
- M: Materialstärke einer piezoelektrischen Sensorfolie
- T: Tiefe in der Vertiefung in der Oberplatte
- H: Höhe der Schutzplatte plus Sensorfolie

## Patentansprüche

1. Luftfeder (10, 10a), beispielsweise für ein Kraftfahrzeug, mit einem schlauchartigen, aus einem verstärkten elastomeren Kunststoff bestehenden Luftfederbalg (12), welcher rotationssymmetrisch zu seiner Längsmittenachse (16) ausgebildet ist und ein erstes axiales Ende (20) sowie ein zweites Ende (28) aufweist, wobei das erste axiale Ende (20) an einer karosserieseitigen Oberplatte (24) und das zweite axiale Ende (28) an einer fahrwerkseitigen Stützeinrichtung (30) befestigt ist, wobei der Luftfederbalg (12), die Oberplatte (24) und die Stützeinrichtung (30) einen mit Druckluft befüllbaren Innenraum (32) begrenzen sowie druckdicht umschließen, und bei welcher ein Anschluss (36) für eine Druckluftleitung vorhanden ist, über den Druckluft in den Innenraum (32) einströmen und aus diesem abströmen kann, **dadurch gekennzeichnet, dass** die Luftfeder (12) mindestens eine piezoelektrische Sensorfolie (90, 110, 130, 150) aufweist, welche derartig ausgebildet und angeordnet ist, dass mittels dieser im Wesentlichen parallel zur Längsmittenachse (16) der Luftfeder (12) auf diese einwirkende mechanische Kräfte (F) messbar sind.

2. Luftfeder nach Anspruch 1, **dadurch gekennzeichnet, dass** mindestens eine piezoelektrische Sensorfolie (90, 110) zumindest bereichsweise an der karosserieseitigen Außenseite (92) der Oberplatte (24) angeordnet ist.

3. Luftfeder nach Anspruch 1, **dadurch gekennzeichnet, dass** mindestens eine piezoelektrische Sensorfolie (130) zumindest bereichsweise an einer innenraumseitigen Innenseite (40) der Oberplatte (24) angeordnet ist.

4. Luftfeder nach Anspruch 3, **dadurch gekennzeichnet, dass** die piezoelektrische Sensorfolie (130) in einer Vertiefung (132) in der innenraumseitigen Innenseite (40) der Oberplatte (24) angeordnet ist.

5. Luftfeder nach Anspruch 4, **dadurch gekennzeichnet, dass** die mindestens eine piezoelektrische Sensorfolie (90, 130) zumindest bereichsweise mit einem flexiblen Schutzelement (133, 134) oder einer Schutzplatte (136) abgedeckt ist.

6. Luftfeder nach Anspruch 1, **dadurch gekennzeichnet, dass** mindestens eine piezoelektrische Sensorfolie (90, 110) zumindest bereichsweise an der fahrwerkseitigen Unterseite (112) einer mit der Stützeinrichtung (30) verbundenen Fußplatte (52) angeordnet ist.

7. Luftfeder nach einem der Ansprüche 1 und 6, **dadurch gekennzeichnet, dass** die Stützeinrichtung (30) einen mit der Fußplatte (52) zentrisch zur Längsmittenachse (16) verbundenen und in Richtung zur Oberplatte (24) gerichteten Stützkegel (46) aufweist, welcher radial außen von einem Stützkörper (60) umschlossen ist, wobei die radiale Außenfläche (62) des Stützkörpers (60) zumindest bereichsweise mit einer geometrisch korrespondierend ausgebildeten Innenfläche (64) eines Außenrings (66) verbunden ist.

8. Luftfeder nach Anspruch 7, **dadurch gekennzeichnet, dass** der Außenring (66) der Stützeinrichtung (30) karosserieseitig mit einer Aufnahmevorrichtung (76) verbunden ist, an welcher eine Gleitplatte (78) aufgenommen und befestigt ist, welche mit deren freien Außenfläche in Richtung zur Oberplatte (24) weist.

9. Luftfeder nach Anspruch 7 oder 8, **dadurch gekennzeichnet, dass** das erste axiale Ende (20) des Luftfederbalgs (12) mittels eines Klemmrings (22) mit der Innenseite (40) der Oberplatte (24) verbunden ist, und dass das zweite axiale Ende (28) des Luftfederbalgs (12) mit dem Außenring (66) der Stützeinrichtung (30) zusammengefügt ist.

10. Luftfeder nach einem der Ansprüche 7 bis 9, **dadurch gekennzeichnet, dass** zwischen der Gleitplatte (78) und der Aufnahmevorrichtung (76) mindestens eine piezoelektrische Sensorfolie (150) angeordnet ist.

11. Luftfeder nach einem der Ansprüche 1 bis 10, **dadurch gekennzeichnet, dass** die mindestens eine piezoelektrische Sensorfolie (90, 110, 130, 150) aus einer flexiblen Trägerfolie gebildet ist, auf der ein piezoelektrisches Substrat aufgebracht ist.

12. Luftfeder nach Anspruch 11, **dadurch gekennzeichnet, dass** eine Materialstärke (M) der mindestens einen piezoelektrischen Sensorfolie (90, 110, 130, 150) zwischen 0,5 µm und 50,0 µm einschließlich der Bereichsgrenzen beträgt.
